# EUROPEAN PATENT APPLICATION

(11) **EP 4 492 081 A1**
(43) Date of publication of application: **15.01.2025**
(21) Application number: 23184581.9
(22) Date of filing: 11.07.2023
(51) Int. Cl.: G01S 5/00, G01S 5/02

(54) **LOCALIZATION DEVICE, SYSTEM, AND METHOD**

(71) Applicant: Rohde & Schwarz GmbH & Co. KG, 81671 München (DE)
(72) Inventor: Stracke, Martin, 83620 Feldkirchen-Westerham (DE)
(74) Representative: Rupp, Christian

(57) **Abstract**

A localization device (10b) for localizing a target (15) communicating wirelessly with multiple base stations (16a, 16b, 16c) is provided. Said localization device (10b) comprises a control unit (11), and a communication unit (12) connected to the control unit (11). The control unit (11) is configured to cause the target (15) with the aid of the communication unit (12) to report radio channel information with respect to at least two of the multiple base stations in the case that the location of the localization device is known or with respect to at least three (16a, 16b, 16c) of the multiple base stations otherwise. Furthermore, the control unit (11) is configured to localize the target (15) on the basis of the radio channel information.

## Description

The invention relates to a localization device for localizing a target communicating wirelessly with multiple base stations, a system for localizing a target communicating wirelessly with multiple base stations, and a method for localizing a target communicating wirelessly with multiple base stations.

Generally, in times of an increasing number of mobile devices, there is a growing need of a localization device, system, and method in order to localize such mobile devices in a particularly precise and efficient manner exemplarily in the context of rescue operations.

EP 1 051 053 A2 relates to a method for identifying the user of a cell phone in a public digital cellular cell phone network and for monitoring outgoing calls from this cell phone. Disadvantageously, said method does not allow for a particularly precise and efficient localization of the cell phone.

Accordingly, there is the object to provide a localization device for localizing a target communicating wirelessly with multiple base stations, a system for localizing a target communicating wirelessly with multiple base stations, and a method for localizing a target communicating wirelessly with multiple base stations, each allowing for a particularly precise and efficient localization of the target.

This object is solved by the features of the independent claims. The dependent claims contain further developments.

According to a first aspect of the invention, a localization device for localizing a target communicating wirelessly with multiple base stations is provided. Said localization device comprises a control unit, and a communication unit connected to the control unit. The control unit is configured to cause the target with the aid of the communication unit to report radio channel information with respect to at least two of the multiple base stations in the case that the location of the localization device is known or with respect to at least three of the multiple base stations otherwise. Furthermore, the control unit is configured to localize the target on the basis of the radio channel information.

Advantageously, a particularly precise and efficient localization of the target can be ensured. In this context, with respect to precision, an accuracy of well below 550 meters, whereas with respect to efficiency, time for localization is significantly reduced. Said accuracy of well below 550 meters can especially be understood in a way that the corresponding resolution of localization comprises a step size being significantly smaller than 550 meters.

Further advantageously, expensive direction finding hardware, such as direction finding antennas and a direction finding receiver, are not needed for localization.

As an additional advantage, for localization of the target, any movement of the localization device is not necessary. With respect to the above-mentioned control unit being configured to cause the target with the aid of the communication unit to report radio channel information, it is noted that this can especially be understood in a manner that the control unit provides a command and/or a message for the communication unit, which transmits said command and/or message to the target. Said command and/or message is configured or adapted, respectively, to cause the target to report radio channel information.

With respect to the localization of the target, it is noted that said localization of the target may especially comprise or be a calculation including said radio channel information. Such a calculation may especially use trilateration and/or at least one heat map.

With respect to the localization device, it is noted that it might be particularly advantageous if the localization device comprises or is a cell site simulator and/or an International Mobile Subscriber Identity (IMSI) catcher.

Furthermore, with respect to causing the target to report the radio channel information, it is noted that it might be particularly advantageous if said causing the target to report the radio channel information is performed during a silent call.

Moreover, especially in the context of causing the target to report the radio channel information, it is noted that it might be particularly advantageous if, especially in an iterative manner, the control unit is configured to send with the aid of the communication unit all cell information and neighbor cell information of prior known locations of possible base stations to the target and to request the target to report back all measurement reports of all received cells until at least two known cells are reported in the case that the location of the localization device is known or at least three known cells are reported otherwise.

According to an implementation form of the first aspect of the invention, especially in the context of causing the target to report the radio channel information, the communication unit is configured to communicate with the target and/or at least a part of the multiple base stations, preferably the multiple base stations, especially on the basis of at least one of the Global System for Mobile Communications (GSM) standard, the Universal Mobile Telecommunications System (UMTS) standard, the Long Term Evolution (LTE) standard, the Fifth Generation (5G) New Radio (NR) standard, the Sixth Generation (6G) Cognitive Radio Network (CRN) standard, or any combination thereof.

Advantageously, for instance, a particularly high flexibility can be ensured, thereby increasing efficiency.

According to an implementation form of the first aspect of the invention, the localization device further comprises an interface connected to the control unit. In this context, the control unit is further configured to acquire the corresponding location of each of the multiple base stations, preferably the corresponding location of each of the at least two of the multiple base stations in the case that the location of the localization device is known or the corresponding location of each of the at least three of the multiple base stations otherwise, via the interface. Advantageously, for example, the corresponding cell tower position and/or radio channel information of towers in the vicinity of the target can be made available in a particularly efficient manner.

According to an implementation form of the first aspect of the invention, the interface is configured to be connected to a database comprising the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise. Additionally or alternatively, the interface is configured to be connected to a measurement device for measuring the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise.

Advantageously, for instance, efficiency can further be increased.

With respect to the database, it is noted that said database may comprise or be a remote database. In this context, a cloud may exemplarily comprise said remote database. Additionally or alternatively, said database may comprise or be a local database. In this context, the localization device may comprise a memory connected to the control unit. Said memory may especially save said local database.

With respect to the measurement device, it is noted that said measurement device may be supplemented or replaced by a measurement unit especially comprised by the localization device. Accordingly, the localization device may comprise a measurement unit connected to the control unit.

According to an implementation form of the first aspect of the invention, the radio channel information comprises or is radio bearer information with respect to the corresponding serving cell and/or at least one neighbor cell, preferably receive level and/or receive quality, more preferably receive level and/or receive quality with respect to the multiple base stations, most preferably receive level and/or receive quality with respect to the at least two of the multiple base stations in the case that the location of the localization device is known or with respect to the at least three of the multiple base stations otherwise.

Advantageously, for example, localization can be achieved based on all available and future radio access technologies, thereby significantly increasing flexibility, and thus also efficiency.

According to an implementation form of the first aspect of the invention, especially in the context of causing the target to report the radio channel information, the control unit is configured to provide a radio channel list for the target with the aid of the communication unit, wherein the target preferably reports the radio channel information exclusively with respect to corresponding channels of the radio channel list.

Advantageously, for instance, said radio channel list can efficiently be provided for the target with the aid of broadcast information, especially System Information Block Type 5 (SIB5) broadcast information.

According to an implementation form of the first aspect of the invention, the radio channel list comprises or is a list comprising radio channels with respect to the corresponding serving cell and/or at least one neighbor cell. In addition to this or as an alternative, the radio channel list comprises or is a broadcast control channel allocation list. Further additionally or further alternatively, the radio channel list comprises exclusively the absolute radio frequency channel numbers that correspond to base stations being in communication with the communication unit and/or having known locations.

Advantageously, for instance, the radio channel list can efficiently be optimized. In this context, the radio channel list may contain only absolute radio frequency channel numbers which are measured by the localization device and whose cell tower position is known.

For the sake of completeness, with respect to the term "absolute radio frequency channel number" (ARFCN), it is noted that said term can especially be understood in an analogous manner in the light of the corresponding standard. Exemplarily, in the context of GSM, ARFCN will be the term to choose, whereas for UMTS, UARFCN (UTRA (UMTS Terrestrial Radio Access) ARFCN) would be appropriate. Further exemplarily, in the context of LTE, EARFCN (E-UTRA (Evolved UMTS Terrestrial Radio Access) ARFCN) would to be used.

Before the second aspect of the invention and the third aspect of the invention are explained in the following, it is noted that all the explanations or advantages, respectively, regarding the first aspect of the invention can analogously apply in the following.

According to a second aspect of the invention, a system for localizing a target communicating wirelessly with multiple base stations is provided. Said system comprises a localization device according to the first aspect of the invention or any of its implementation forms, respectively, and at least two of the multiple base stations in the case that the location of the localization device is known or at least three of the multiple base stations otherwise.

According to an implementation form of the second aspect of the invention, the system further comprises the target, wherein the target preferably comprises or is at least one of a mobile device, a phone, a laptop, or any combination thereof.

According to an implementation form of the second aspect of the invention, the system further comprises a measurement device for measuring the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise.

According to a third aspect of the invention, a method, especially performed by and/or using a localization device according to any of the first aspect of the invention or any of its implementation forms, respectively, for localizing a target communicating wirelessly with multiple base stations is provided. Said method comprises the steps of causing the target to report radio channel information with respect to at least two of the multiple base stations in the case that the location of the localization device is known or with respect to at least three of the multiple base stations otherwise especially with the aid of a control unit and a communication unit of the localization device, and localizing the target on the basis of the radio channel information especially with the aid of the control unit of the localization device.

According to an implementation form of the third aspect of the invention, especially in the context of causing the target to report the radio channel information, the method further comprises the step of communicating with the target and/or at least a part of the multiple base stations, preferably the multiple base stations, especially on the basis of at least one of the Global System for Mobile Communications standard, the Universal Mobile Telecommunications System standard, the Long Term Evolution standard, the Fifth Generation New Radio standard, the Sixth Generation Cognitive Radio Network standard, or any combination thereof especially with the aid of the communication unit of the localization device.

According to an implementation form of the third aspect of the invention, the method further comprises the step of acquiring the corresponding location of each of the multiple base stations, preferably the corresponding location of each of the at least two of the multiple base stations in the case that the location of the localization device is known or the corresponding location of each of the at least three of the multiple base stations otherwise, especially with the aid of the control unit via an interface of the localization device.

According to an implementation form of the third aspect of the invention, the method further comprises the steps of connecting the interface of the localization device to a database comprising the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise, and/or connecting the interface of the localization device to a measurement device for measuring the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise.

According to an implementation form of the third aspect of the invention, the radio channel information comprises or is radio bearer information with respect to the corresponding serving cell and/or at least one neighbor cell, preferably receive level and/or receive quality, more preferably receive level and/or receive quality with respect to the multiple base stations, most preferably receive level and/or receive quality with respect to the at least two of the multiple base stations in the case that the location of the localization device is known or with respect to the at least three of the multiple base stations otherwise.

According to an implementation form of the third aspect of the invention, especially in the context of causing the target to report the radio channel information, the method further comprises the step of providing a radio channel list for the target especially with the aid of the control unit and the communication unit of the localization device, wherein the target preferably reports the radio channel information exclusively with respect to corresponding channels of the radio channel list.

According to an implementation form of the third aspect of the invention, the radio channel list comprises or is a list comprising radio channels with respect to the corresponding serving cell and/or at least one neighbor cell. In addition to this or as an alternative, the radio channel list comprises or is a broadcast control channel allocation list. Further additionally or further alternatively, the radio channel list comprises exclusively the absolute radio frequency channel numbers that correspond to base stations being in communication with the communication unit and/or having known locations.

Exemplary embodiments of the invention are now further explained with respect to the drawings by way of example only, and not for limitation. In the drawings:
- Fig. 1A: shows an exemplary embodiment of the first aspect in combination with the second aspect of the invention;
- Fig. 1B: shows a further exemplary embodiment of the first aspect in combination with the second aspect of the invention;
- Fig. 2A: shows a further exemplary embodiment based on the one of Fig. 1A;
- Fig. 2B: shows a further exemplary embodiment based on the one of Fig. 1B; and

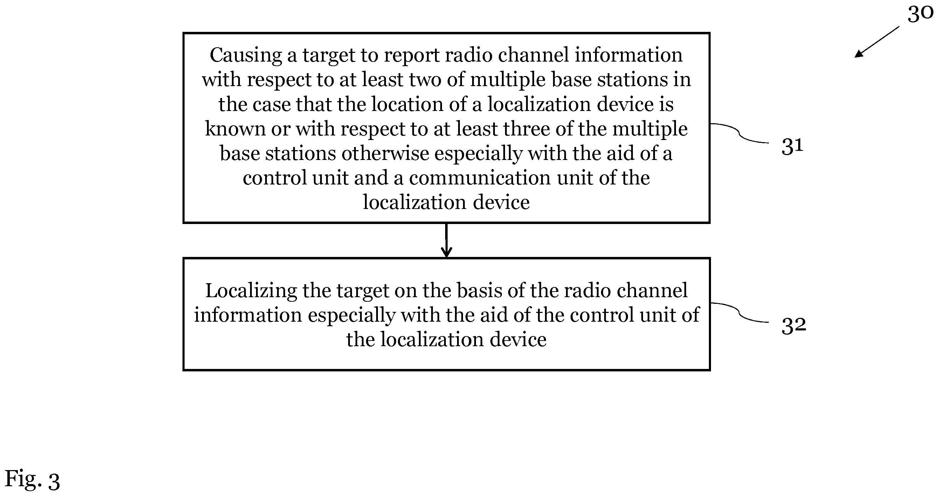

- Fig. 3: shows a flow chart of an embodiment of the third aspect of the invention.

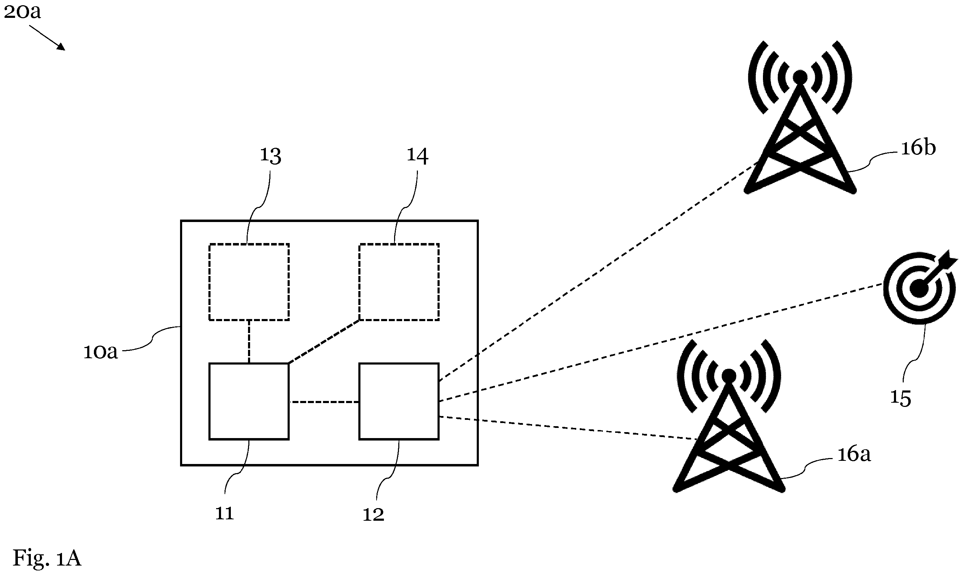

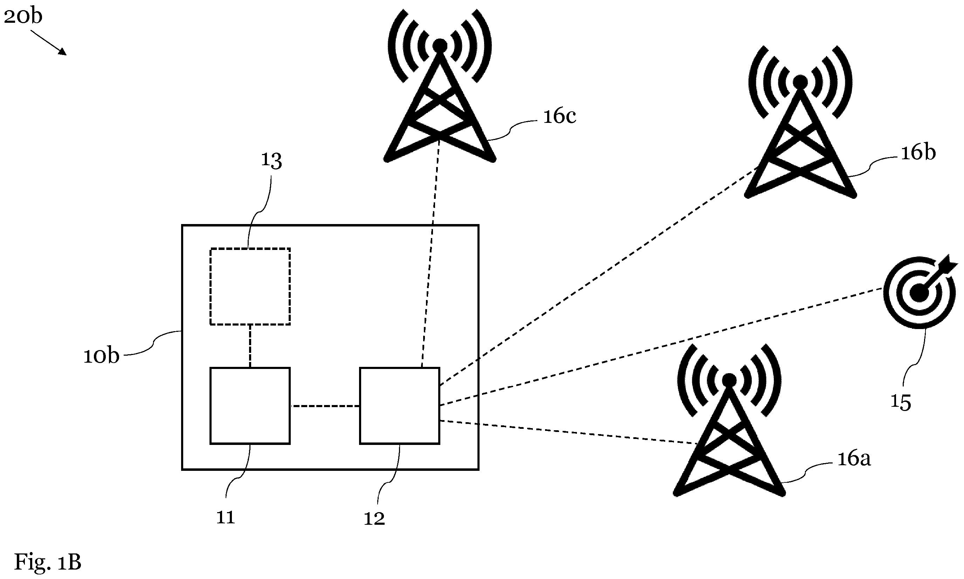

With respect to each of Fig. 1A and Fig. 1B, a block diagram of an exemplary embodiment of the localization device 10a or 10b, respectively, is illustrated in combination with an exemplary embodiment of the system 20a or 20b, respectively, for localizing a target 15 communicating wirelessly with multiple base stations 16a, 16b, 16c.

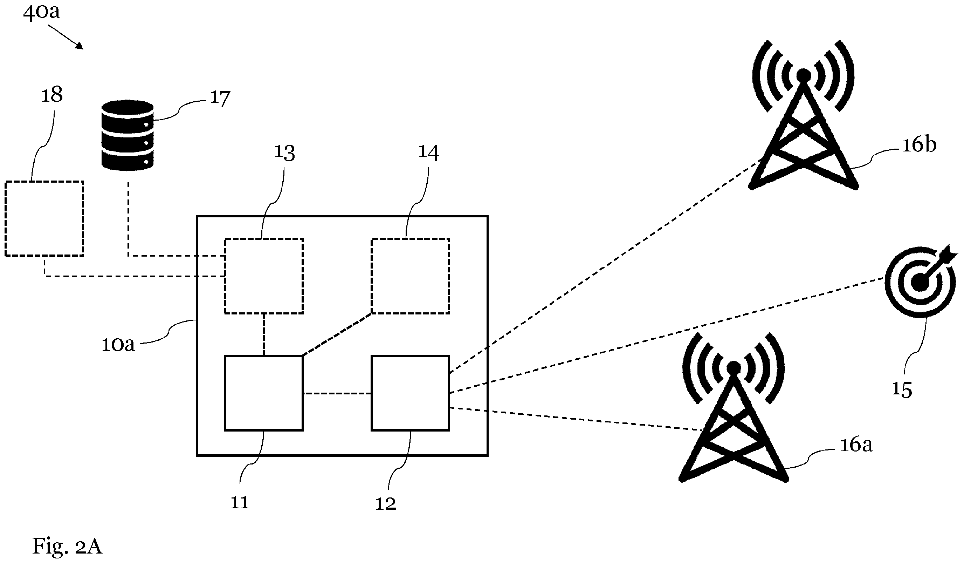

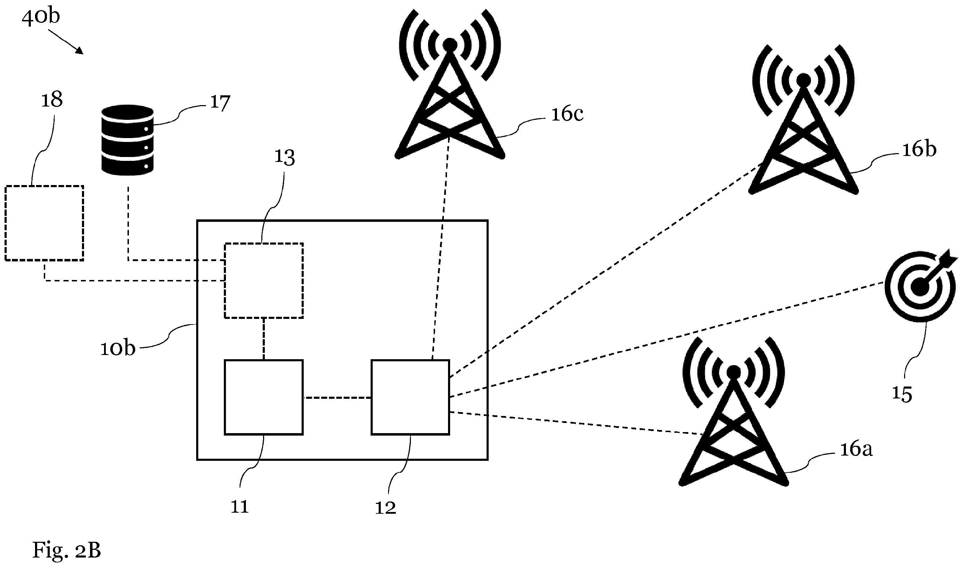

For the sake of completeness, it is noted that with respect to Fig. 1A, Fig. 1B, Fig. 2A, and Fig. 2B, analogous parts or elements, respectively, of said figures are not explained repeatedly in the following but said parts or elements, respectively, are equipped with the same reference signs in said figures.

As it can be seen from both Fig. 1A and Fig. 1B, the localization device 10a or 10b, respectively, for localizing the target 15 communicating wirelessly with the multiple base stations 16a, 16b, 16c comprises a control unit 11 and a communication unit 12 being connectable and/or connected to the control unit 11.

It is noted that Fig. 1A differs from Fig. 1B especially in that the control unit 11 of the localization device 10a is configured to cause the target 15 with the aid of the communication unit 12 to report radio channel information with respect to at least two of the multiple base stations, namely base stations 16a, 16b, in the case that the location of the localization device 10a is known, whereas the control unit 11 of the localization device 10b is configured to cause the target 15 with the aid of the communication unit 12 to report radio channel information with respect to at least three of the multiple base stations, namely base stations 16a, 16b, 16c.

Accordingly, in the case of Fig. 1A, the location of the localization device 10a is known, whereas in the case of Fig. 1B, the location of the localization device 10b is unknown. In the context of the first case that said location of the localization device 10a is known, it might be particularly advantageous if the control unit 11 of the localization device 10a has knowledge about the location of the localization device 10a.

Furthermore, also with respect to said first case that said location of the localization device 10a is known, it is noted that it might be particularly advantageous if the localization device 10a comprises a location determination unit 14 being connectable and/or connected to the control unit 11. Said location determination unit 14 may especially be configured to determine the location of the localization device 10a. Additionally or alternatively, the location determination unit 14 may especially comprise or be a Global Positioning System (GPS) unit.

Moreover, it is noted that the control unit 11 of the localization device 10a or 10b, respectively, is configured to localize the target 15 on the basis of the radio channel information. Accordingly, said localization of the target 15 may especially comprise or be a calculation including said radio channel information. Such a calculation may especially use trilateration and/or at least one heat map.

With respect to the communication unit 12, it is noted that, especially in the context of causing the target 15 to report the radio channel information, it might be particularly advantageous if the communication unit 12 is configured to communicate with the target 15 and/or at least a part of the multiple base stations 16a, 16b, 16c, preferably the multiple base stations 16a, 16b, 16c, namely the base stations 16a, 16b in the case of Fig. 1A or the base stations 16a, 16b, 16c in the case of Fig. 1B, respectively, especially on the basis of at least one of the Global System for Mobile Communications standard, the Universal Mobile Telecommunications System standard, the Long Term Evolution standard, the Fifth Generation New Radio standard, the Sixth Generation Cognitive Radio Network standard, or any combination thereof.

As it can further be seen from Fig. 1A or Fig. 1B, respectively, the localization device 10a or 10b, respectively, may further comprise an interface 13 connectable and/or connected to the control unit 11.

In this context, it might be particularly advantageous if the control unit 11 is further configured to acquire the corresponding location of each of the multiple base stations 16a, 16b, 16c, preferably the corresponding location of each of the at least two base stations 16a, 16b of Fig. 1A or the corresponding location of each of the at least three base stations 16a, 16b, 16c of Fig. 1B, via the interface 13.

With respect to said interface 13, it is noted that, as illustrated by Fig. 2A or Fig. 2B, respectively, it might be particularly advantageous if the interface 13 is configured to be connectable and/or connected to a database 17 comprising the corresponding location of at least a part or each of the multiple base stations 16a, 16b, 16c, preferably the corresponding location of at least a part or each of the at least two base stations 16a, 16b of Fig. 1A or Fig. 2A, respectively, or the corresponding location of each of the at least three base stations 16a, 16b, 16c of Fig. 1B or Fig. 2B, respectively.

In addition to this or as an alternative, as also illustrated by Fig. 2A or Fig. 2B, respectively, the interface 13 may be configured to be connectable and/or connected to a measurement device 18 for measuring the corresponding location of at least a part or each of the multiple base stations 16a, 16b, 16c, preferably the corresponding location of at least a part or each of the at least two base stations 16a, 16b of Fig. 1A or Fig. 2A, respectively, for the case that the location of the localization device 10a is known or the corresponding location of each of the at least three base stations 16a, 16b, 16c of Fig. 1B or Fig. 2B, respectively.

With respect to the above-mentioned radio channel information, it is noted that it might be particularly advantageous if the radio channel information comprises or is radio bearer information with respect to the corresponding serving cell and/or at least one neighbor cell, preferably receive level and/or receive quality, more preferably receive level and/or receive quality with respect to the multiple base stations 16a, 16b, 16c, most preferably receive level and/or receive quality with respect to the at least two base stations 16a, 16b of Fig. 1A or Fig. 2A, respectively, or with respect to the at least three base stations 16a, 16b, 16c of Fig. 1B or Fig. 2B, respectively.

Again, with respect to the control unit 11, especially in the context of causing the target 15 to report the radio channel information, it is noted that it might be particularly advantageous if the control unit 11 is configured to provide a radio channel list for the target 15 with the aid of the communication unit 12.

In this context, the target 15 may preferably report the radio channel information exclusively with respect to corresponding channels of the radio channel list.

With respect to said radio channel list, it is noted that it might be particularly advantageous if the radio channel list comprises or is a list comprising radio channels with respect to the corresponding serving cell and/or at least one neighbor cell.

In addition to this or as an alternative, the radio channel list may especially comprise or be a broadcast control channel allocation list.

Further additionally or further alternatively, the radio channel list may especially comprise exclusively the absolute radio frequency channel numbers that correspond to base stations, such as base stations 16a, 16b, 16c, being in communication with the communication unit 12 and/or having known locations. In the context of having known locations, the control unit 11 may especially have knowledge about the corresponding locations of said base stations.

As already mentioned above, each of Fig. 1A and Fig. 1B additionally illustrates a system 20a or 20b, respectively, for localizing the target 15, which also applies for each of Fig. 2A and Fig. 2B showing systems 40a and 40b.

According to Fig. 1A, the system 20a comprises the localization device 10a and at least two base stations, exemplarily the base stations 16a, 16b, in the case that the location of the localization device 10a is known.

In accordance with Fig. 1B, the system 20b comprises the localization device 10b and at least three base stations, exemplarily the base stations 16a, 16b, 16, in the case that the location of the localization device 10b is unknown.

With respect to each of the systems 20a and 20b, it is noted that the system 20a or 20b, respectively, can further comprise the target 15. In this context, the target 15 may preferably comprises or be at least one of a mobile device, a phone, a laptop, or any combination thereof.

Furthermore, in accordance with Fig. 2A and Fig. 2B, the system 40a based on system 20a or the system 40b based on system 20b, respectively, can further comprise the above-mentioned database 17 and/or the measurement device 18 especially for measuring the corresponding location of at least a part or each of the multiple base stations 16a, 16b, 16c, preferably the corresponding location of at least a part or each of the at least two base stations 16a, 16b of Fig. 2A or the corresponding location of each of the at least three base stations 16a, 16b, 16c of Fig. 2B.

Finally, Fig. 2 shows a flow chart 30 of an exemplary embodiment of the method for localizing a target, such as the above-mentioned target 15, communicating wirelessly with multiple base stations, such as the above-mentioned base stations 16a, 16b, 16c. A first step 31 comprises causing the target to report radio channel information with respect to at least two of the multiple base stations in the case that the location of the localization device is known or with respect to at least three of the multiple base stations otherwise. A second step 32 comprises localizing the target on the basis of the radio channel information.

It is noted that it might be particularly advantageous if the method 30 is performed by and/or using a localization device such as the above-mentioned localization device 10a or 10b, respectively. Accordingly, the control unit 11 and the communication unit 12 of the localization device 10a or 10b, respectively, may especially support step 31. Furthermore, the control unit 11 of the localization device 10a or 10b, respectively, may especially support step 32.

Moreover, with respect to the second step 32, it is noted that said localization of the target may especially comprise or be a calculation including the above-mentioned radio channel information. Such a calculation may especially use trilateration and/or at least one heat map.

It is further noted that it might be particularly advantageous if, especially in the context of causing the target to report the radio channel information according to step 31, the method further comprises the step of communicating with the target and/or at least a part of the multiple base stations, preferably the multiple base stations, especially on the basis of at least one of the Global System for Mobile Communications standard, the Universal Mobile Telecommunications System standard, the Long Term Evolution standard, the Fifth Generation New Radio standard, the Sixth Generation Cognitive Radio Network standard, or any combination thereof especially with the aid of the communication unit (12) of the localization device 10a or 10b, respectively.

Furthermore, it might be particularly advantageous if the method 30 further comprises the step of acquiring the corresponding location of each of the multiple base stations, preferably the corresponding location of each of the at least two of the multiple base stations in the case that the location of the localization device 10a is known or the corresponding location of each of the at least three of the multiple base stations otherwise, especially with the aid of the control unit 11 via an interface, such as the above-mentioned interface 13, of the localization device 10a or 10b, respectively.

In this context, it might be particularly advantageous if the method 30 further comprises the steps of connecting the interface 13 of the localization device 10a or 10b, respectively, to a database, such as the above-mentioned database 17, comprising the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise, and/or connecting the interface 13 of the localization device 10a or 10b, respectively, to a measurement device, such as the above-mentioned measurement device 18, for measuring the corresponding location of at least a part or each of the multiple base stations, preferably the corresponding location of at least a part or each of the at least two of the multiple base stations in the case that the location of the localization device is known or the corresponding location of each of the at least three of the multiple base stations otherwise.

It is further noted that it might be particularly advantageous if, especially in the context of causing the target to report the radio channel information according to the first step 31, the method 30 further comprises the step of providing a radio channel list for the target especially with the aid of the control unit 11 and the communication unit 12 of the localization device 10a or 10b, respectively. In this context, the target may preferably report the radio channel information exclusively with respect to corresponding channels of the radio channel list.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A localization device (10a, 10b) for localizing a target (15) communicating wirelessly with multiple base stations (16a, 16b, 16c), the localization device (10a, 10b) comprising:
a control unit (11), and
a communication unit (12) connected to the control unit (11),
wherein the control unit (11) is configured to cause the target (15) with the aid of the communication unit (12) to report radio channel information with respect to at least two (16a, 16b) of the multiple base stations (16a, 16b, 16c) in the case that the location of the localization device (10a) is known or with respect to at least three (16a, 16b, 16c) of the multiple base stations (16a, 16b, 16c) otherwise, and
wherein the control unit (11) is configured to localize the target (15) on the basis of the radio channel information.

2. The localization device (10a, 10b) according to claim 1, wherein, especially in the context of causing the target (15) to report the radio channel information, the communication unit (12) is configured to communicate with the target (15) and/or at least a part of the multiple base stations (16a, 16b, 16c), preferably the multiple base stations (16a, 16b, 16c), especially on the basis of at least one of the Global System for Mobile Communications standard, the Universal Mobile Telecommunications System standard, the Long Term Evolution standard, the Fifth Generation New Radio standard, the Sixth Generation Cognitive Radio Network standard, or any combination thereof.

3. The localization device (10a, 10b) according to claim 1 or 2,
wherein the localization device (10a, 10b) further comprises an interface (13) connected to the control unit (11),
wherein the control unit (11) is further configured to acquire the corresponding location of each of the multiple base stations (16a, 16b, 16c), preferably the corresponding location of each of the at least two (16a, 16b) of the multiple base stations (16a, 16b, 16c) in the case that the location of the localization device (10a) is known or the corresponding location of each of the at least three (16a, 16b, 16c) of the multiple base stations otherwise, via the interface (13).

4. The localization device (10a, 10b) according to claim 3, wherein the interface (13) is configured to be connected to a database (17) comprising the corresponding location of at least a part or each of the multiple base stations (16a, 16b, 16c), preferably the corresponding location of at least a part or each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise, and/or
wherein the interface (13) is configured to be connected to a measurement device (18) for measuring the corresponding location of at least a part or each of the multiple base stations (16a, 16b, 16c), preferably the corresponding location of at least a part or each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise.

5. The localization device (10a, 10b) according to any of the claims 1 to 4,
wherein the radio channel information comprises or is radio bearer information with respect to the corresponding serving cell and/or at least one neighbor cell, preferably receive level and/or receive quality, more preferably receive level and/or receive quality with respect to the multiple base stations (16a, 16b, 16c), most preferably receive level and/or receive quality with respect to the at least two (16a, 16b) of the multiple base stations (16a, 16b, 16c) in the case that the location of the localization device (10a) is known or with respect to the at least three (16a, 16b, 16c) of the multiple base stations (16a, 16b, 16c) otherwise.

6. The localization device (10a, 10b) according to any of the claims 1 to 5,
wherein, especially in the context of causing the target (15) to report the radio channel information, the control unit (11) is configured to provide a radio channel list for the target (15) with the aid of the communication unit (12), wherein the target (15) preferably reports the radio channel information exclusively with respect to corresponding channels of the radio channel list.

7. The localization device (10a, 10b) according to claim 6, wherein the radio channel list comprises or is a list comprising radio channels with respect to the corresponding serving cell and/or at least one neighbor cell, and/or wherein the radio channel list comprises or is a broadcast control channel allocation list, and/or
wherein the radio channel list comprises exclusively the absolute radio frequency channel numbers that correspond to base stations (16a, 16b, 16c) being in communication with the communication unit (12) and/or having known locations.

8. A system (20a, 20b, 40a, 40b) for localizing a target (15) communicating wirelessly with multiple base stations (16a, 16b, 16c), the system (20a, 20b, 40a, 40b) comprising:
a localization device (10a, 10b) according to any of the claims 1 to 7, and
at least two (16a, 16b) of the multiple base stations (16a, 16b, 16c) in the case that the location of the localization device (10a) is known or at least three (16a, 16b, 16c) of the multiple base stations (16a, 16b, 16c) otherwise.

9. The system (20a, 20b, 40a, 40b) according to claim 8, wherein the system (20a, 20b, 40a, 40b) further comprises the target (15), wherein the target (15) preferably comprises or is at least one of a mobile device, a phone, a laptop, or any combination thereof.

10. The system (20a, 20b, 40a, 40b) according to claim 8 or 9,
wherein the system (20a, 20b, 40a, 40b) further comprises a measurement device (18) for measuring the corresponding location of at least a part or each of the multiple base stations (16a, 16b, 16c), preferably the corresponding location of at least a part or each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise.

11. A method (30), especially performed by and/or using a localization device (10a, 10b) according to any of the claims 1 to 7, for localizing a target (15) communicating wirelessly with multiple base stations (16a, 16b, 16c), the method (30) comprising the steps of:
causing (31) the target (15) to report radio channel information with respect to at least two (16a, 16b) of the multiple base stations (16a, 16b, 16c) in the case that the location of the localization device (10a) is known or with respect to at least three (16a, 16b, 16c) of the multiple base stations (16a, 16b, 16c) otherwise especially with the aid of a control unit (11) and a communication unit (12) of the localization device (10a, 10b), and
localizing the target (15) on the basis of the radio channel information especially with the aid of the control unit (11) of the localization device (10a, 10b).

12. The method according to claim 11,
wherein, especially in the context of causing (31) the target (15) to report the radio channel information, the method further comprises the step of communicating with the target (15) and/or at least a part of the multiple base stations (16a, 16b, 16c), preferably the multiple base stations (16a, 16b, 16c), especially on the basis of at least one of the Global System for Mobile Communications standard, the Universal Mobile Telecommunications System standard, the Long Term Evolution standard, the Fifth Generation New Radio standard, the Sixth Generation Cognitive Radio Network standard, or any combination thereof especially with the aid of the communication unit (12) of the localization device (10a, 10b).

13. The method according to claim 11 or 12,
wherein the method further comprises the step of acquiring the corresponding location of each of the multiple base stations (16a, 16b, 16c), preferably the corresponding location of each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise, especially with the aid of the control unit (11) via an interface (13) of the localization device (10a, 10b)

14. The method according to claim 13,
wherein the method further comprises the steps of:
connecting the interface (13) of the localization device (10a, 10b) to a database (17) comprising the corresponding location of at least a part or each of the multiple base stations (16a, 16b, 16c), preferably the corresponding location of at least a part or each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise, and/or
connecting the interface (13) of the localization device (10a, 10b) to a measurement device (18) for measuring the corresponding location of at least a part or each of the multiple base stations (16a, 16b, 16c), preferably the corresponding location of at least a part or each of the at least two (16a, 16b) of the multiple base stations (16a, 16b, 16c) in the case that the location of the localization device (10a) is known or the corresponding location of each of the at least three (16a, 16b, 16c) of the multiple base stations (16a, 16b, 16c) otherwise.

15. The method according to any of the claims 11 to 14, wherein, especially in the context of causing (31) the target (15) to report the radio channel information, the method further comprises the step of providing a radio channel list for the target (15) especially with the aid of the control unit (11) and the communication unit (12) of the localization device (10a, 10b), wherein the target (15) preferably reports the radio channel information exclusively with respect to corresponding channels of the radio channel list.
